# EUROPEAN PATENT APPLICATION

(11) **EP 1 191 703 A1**
(43) Date of publication of application: **27.03.2002**
(21) Application number: 00810856.5
(22) Date of filing: 20.09.2000
(51) Int. Cl.: H04B 1/707, H04L 27/227

(54) **Receiver structure in a digital communication system**

(71) Applicant: Ascom Systec AG, 5506 Mägenwil (CH)
(72) Inventor: Reed, Mark Craig, 5702 Niederlenz (CH); Eglin, Peter, 5506 Mägenwil (CH)
(74) Representative: Roshardt, Werner Alfred, Dipl.-Phys.

(57) **Abstract**

A receiver structure (1) for a DS/CDMA (direct sequence/code division multiple access) digital communication system comprises a correlator (3) with a plurality of correlator-units (4.1 to 4.3) for code acquisition as the first step of code synchronisation of an incoming signal which is spread on the sender side with a spreading code. Since the communication system channel shows large frequency offsets, each correlator unit is made for searching a specific time- and frequency-region by using a separate despreading code for correlation against the incoming signal (2). The first correlator-unit (4.1) uses a replica (5) of the original spreading code which means no frequency offset. The second correlator-unit (4.2) uses a despreading code which is a swivelled version of the replica where a swivelling operator (7) rotates each segment of the replica by ±π/4 or a multiple thereof. In the chosen example, a frequency offset of ±7 kHz of the incoming signal corresponds to a rotation of the n-th segment by an angle of ±((n - 1) * π/4). The third correlator-unit (4.3) also uses a swivelled code. The swivelling operator (6) rotates the n-th segment by an angle of ±((n-1) * π/4), corresponding in the example to a frequency offset of ±12 kHz. For easier implementation of the correlator the symbol values of the symbols at phase offsets of ±π/4, ±3*π/4, ±5*π/4 and ±7*π/4 are taken as (±1 ±j) instead of 0.5*√2* (±1 ±j).

## Description

### Technical Field

The invention relates to a receiver structure with a non-coherent correlator for acquisition of a direct sequence spread-spectrum signal in a digital communication system, the signal being spread with a spreading code. The correlator comprises a plurality of correlator-units where each of these correlator-units is made for searching a specific time- and frequency-region. The invention also relates to a digital communication system with a basestation and a plurality of mobile terminals, where the basestation or the mobile terminals comprises such a receiver structure as well as a corresponding correlator and a process for non-coherent acquisition of a direct sequence spread-spectrum signal.

### Background Art

Spread-spectrum (SS) modulation is a widely known technique for signal transmission in a digital communication system. Such systems are called CDMA (code division multiple access) systems.

In a direct sequence CDMA (DS/CDMA) communication system a narrowband signal is spread in bandwidth by multiplication with a spreading code sequence on the transmitter side. The symbols of the signal and the spreading code values (chips) can be real or complex valued with values of for example 1 and 0 or 1 and -1. To restore the original narrowband signal at the receiver side the received signal has to be despread by multiplication with a despreading code which is a replica of the spreading code sequence. For a correct restoration of the original signal the despreading code has to be synchronised with the received signal. Synchronising can be divided into two phases, an initial acquisition phase and a tracking phase. Initial acquisition usually results in synchronised code chip phases of the received signal and the despreading code within a range of a small fraction of the chip interval. Then the tracking phase holds the code sequence in this range.

Initial acquisition when no frequency offset is present in the received signal is a well researched area. If the phase of the carrier of the received signal is known, coherent acquisition which can be easily implemented, can be performed. As the carrier phase is unknown in most cases non-coherent acquisition has to be used. The determination if a signal is present is usually done by performing correlation of the despreading code against the received signal. If the received signal has a frequency offset, as for example in satellite transmission systems, a substantial degredation or even failure of the correlation process results.

A commonly used method of solving this problem is to provide multiple correlators at the receiver where each correlator has a different frequency rotator at the front end.

This however increases the number of correlators by the number of frequency bins used and therefore would increase the complexity of a hardware realisation.

### Summary of the Invention

It is therefore an object of the present invention to provide a receiver structure of the aforementioned kind which enables low complexity receiver solutions while offering reliable timing acquisition performance over the whole frequency range of interest.

This object can be achieved with a a receiver structure defined by Claim 1. According to the invention the receiver structure comprises a non-coherent correlator for acquisition of a DS/SS signal in a digital communication system. Prior to the transmission of the signal from the sender to the receiver the signal is spread at the sender side with a spreading code. Such a spreading code for example a pseudo-noise sequence (PN-sequence) consists of a plurality of chips with binary values. For correlation of the received signal with a plurality of codes with a different frequency offset the correlator comprises a plurality of correlator-units where each correlator-unit is made for searching a specific time- and a specific frequency-region. Instead of providing each correlator-unit with a different frequency rotator at the front end, each correlator-unit uses a different despreading code for determination of the correlation with the received signal. In this case the despreading codes are not replicas of the original spreading code but are swivelled versions thereof. That means each despreading code consists of a plurality of chips, where each chip is the result of a phase rotation of the corresponding spreading code chip with a complex swivelling factor. The swivelling factors are chosen such that their phases are ± π/4 or a multiple thereof.

A receiver structure as described above allows implementation of correlators for code acquisition with very little performance loss. As will be shown later the choice of π/4 (and multiples thereof) as the phase of the swivelling factors permits realisation of high speed correlators with a very low complexity. Further no special dedicated carrier has to be used to estimate the frequency offset, which minimises the need for additional bandwidth.

Since swivelling of the code chips is an indication for the frequency offset considered in the despreading code, the swivelling factors of two successive chips of the despreading code preferably are chosen such that their phases are either identical or differ only by an angle of ± π/4.

In a preferred embodiment of the invention the swivelling factors are chosen such that the resulting chip of the despreading code lies on the unit square in the complex plane. In other words: The amplitude of each swivelling factor is chosen such that the amplitude of the resulting symbol of the despreading code with a phase that is an even multiple of ± π/4 is equal to 1 and the amplitude of the resulting symbol of the despreading code with an phase that is an odd multiple of ± π/4 is equal to √2. Therefore under the assumption that the values of the chips of the spreading code are normed to 1, the possible complex chip values of the despreading codes are: (1 + 0), (1 + j), (0 + j), (-1 + j), (-1 + 0), (-1 -j), (0 - j) and (1 - j).

The choice of these specific swivelling factors facilitates the easy computation of the complex products because complex multiplications are avoided. A Phase rotation of a symbol which lies on a corner or in the middle of an edge of the unit square can be computed by simply adding and subtracting real and imaginary components of the symbol and the swivelling factor in the right manner.

In a digital communication system with a basestation and a plurality of mobile terminals the described receiver structure can be used either in a receiver of the basestation or in a receiver of a mobile terminal. However, implementation in the basestation is seen as the major application of the invention.

The technique is independent of the actual frame format or the exact spreading/scrambling formats utilised on the up- and the downlink. It can also cope with signals where timing drift occurs.

Such digital communication systems comprise for instance CDMA satellite or radar systems where large frequency offsets occur due to fast moving objects such as a sender and/or receiver or a signal, reflected from an object.

In principle the invention can advantageously be applied to every non-coherent correlator for code acquisition in any DS/CDMA digital communication system where large frequency offsets occur.

In a process according to the invention for non-coherent acquisition of a DS/SS signal by correlation of a despreading code against the received signal, the main characteristic is to use a despreading code where the phase of each complex valued chip is a multiple of ± π/4.

There are several ways for realisation of this process. It can be realised literally by swivelling each chip of the spreading code according to the frequency offset to cope with. Instead of first swivelling the chips and then multiplying them by the incoming sequences, the chips can be swivelled after being sign changed with the corresponding chips. Such a realisation of this process is given in the following preferred embodiment of this process, specifically those parts of the process for correlation of the signal and the despreading code. It comprises the following steps:
a) First a plurality of data taps is generated by sampling the received signal at a sampling frequency.
b) The data taps are divided into their real component and their imaginary component.
c) For the real and the imaginary component separately a plurality of sign changed values is generated by sign changing each data tap with the corresponding chip of the despreading code, which at this stage is the same as the spreading code.
d) The sign changed values then are subdivided in a plurality of segments by simply summing up real and imaginary components of the symbols of a segment separately. Number and length of the segments depend on the frequency offset to be searched and even the segments for one specific despreading code (that means for a specific frequency offset) may have different lengths. These segments permit a faster correlation of the signal with the code.
e) By adding and subtracting the real and imaginary components of the segments in a given manner the segments then are swivelled according to the concerned frequency offset.
f) A chip sample of a correlation result is obtained by accumulating the complex values of the swivelled segments.
g) Following the determination of this complex value the absolute value is taken. Preferably the absolute value is taken as the sum of the absolute values of its components instead of the the square root of the sum of the squared values of the components.
h) Finally, correlation is completed by computing the correlation value over an entire data symbol through accumulating over a number of symbols.

In another preferred embodiment of the process according to the invention the correlation value is compared to a predefined threshold in order to decide if acquisition can be declared or not. If the correlation value exceeds the threshold acquisition is declared and despreading of the received signal with correct time and frequency offset of the despreading code can be started. If the correlation value does not exceed the threshold acquisition is started again.

From the following detailed description and from all the claims as a whole it will be clear to a person skilled in the art, that there exist more advantageous embodiments and combinations of characteristics of the invention.

### Brief description of the drawings

The drawings used for illustration of the examples show:
- Fig. 1: A schematic diagram of a receiver structure according to the invention;
- Fig. 2: the possible complex values of the despreading codes;
- Fig. 3: a schematic diagram of the power loss of the correlator of figure 1;
- Fig. 4: a schematic diagram of an exemplary realisation of a correlator-unit and
- Fig. 5: a schematic diagram of the adder tree used for sequence segmentation.

In principle in the drawings the same objects are given the same reference signs.

### Ways of carrying out the invention

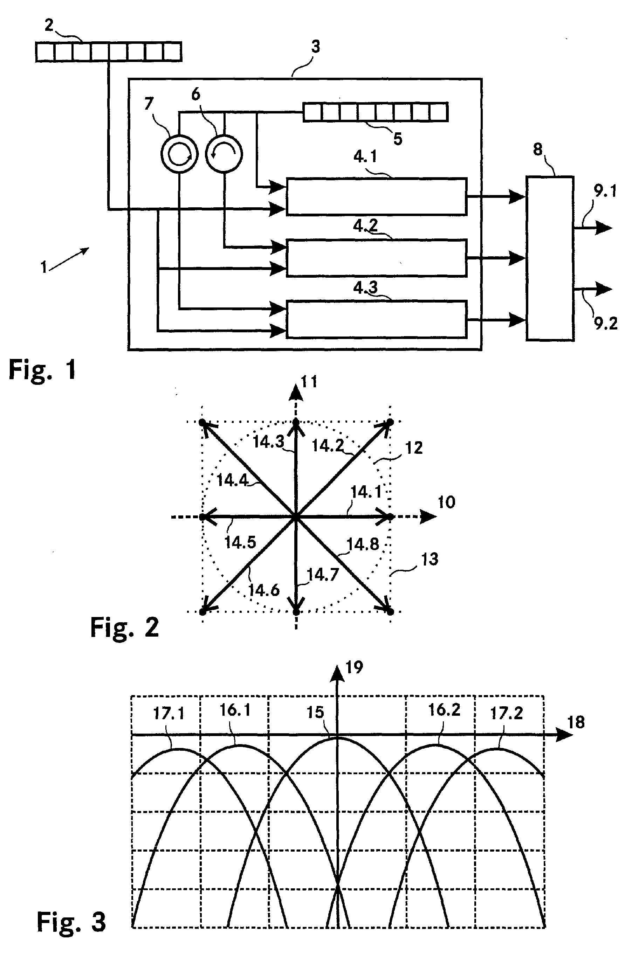

Figure 1 shows a schematic diagram of a receiver structure 1 according to the invention. It only shows those elements of the receiver structure 1 that are essential for illustration of the invention. Some components such as antenna, down converter, sampler, descrambler, modulator, decoder etc. are not drawn.

The signal which is sent out by the sender is transmitted over a channel in a DS/CDMA digital communication system. The channel may have fast and/or slow fading, multipath spreading and additive white gaussian noise (AWGN). The digital communication system is assumed to be a satellite communication system where large frequency offsets may occur due to fast moving of sender and receiver respectively. The Frequency offsets can be in the order of the symbol rate, that is, for example 15 kHz.

In a first step the despreading code has to be synchronised with the incoming signal in time and frequency. For this purpose the signal that is spread with a spreading code is correlated with a despreading code. In the state of the art, this despreading code is an exact, locally generated replica of the spreading code which is correlated with the received signal by using multiple correlator-units with different frequency rotators. The invention does not use exact replicas but for covering different frequency offsets it uses correspondingly swivelled despreading codes. Figure 1 shows a correlator 3 with three correlator-units 4.1, 4.2, 4.3 for frequency offsets of 0 kHz, ±7 kHz and ±12 kHz.

It is to mention that the chosen values of ±7 kHz and ±12 kHz for the swivelling of the despreading code are only example values. Depending i.e. on the expected frequency offset of the real communication channel other values could be appropriate.

The first correlater-unit 4.1 correlates the received and down converted signal 2 with a despreading code which is not swivelled at all and therefore identical to the locally generated replica 5 of the spreading code. The performed correlation relates to a frequency offset of 0 kHz.

The third correlater-unit 4.3 correlates the signal 2 with a despreading code which is swivelled according to a frequency offset of ±12 kHz. The n-th segment of the despreading code is computed by taking the n-th segment of the spreading code replica 5 and swivelling, that means rotating it by an appropriate angle of ±((n-1) * π/4). That means that every segment is once more swivelled by π/4 than its preceding segment. This swivelling is indicated by the swivelling operator 7 which is drawn as a circle with a 360 degree arrow in it.

The second correlater-unit 4.2 correlates the signal 2 with a despreading code which is swivelled according to a frequency offset of ±7 kHz. The n-th segment of the despreading code is computed by taking the n-th segment of the spreading code replica 5 and swivelling it by an angle of ±((n - 1) * π/4). That means that every segment is once more swivelled by π/4 than its preceding segment. Since this swivelling has approximately only half the speed than the swivelling operator 7 it is indicated by the swivelling operator 6 which is drawn as a circle with only a 180 degree arrow in it.

The resulting despreading code symbols are one of the following complex numbers: (1 + 0), 0.5*√2*(1 + j), (0 + j), 0.5*√2*(-1 + j), (-1 + 0), 0.5*√2*(-1 -j), (0 - j) and 0.5*√2*(1 - j).

In the sense of a simplified implementation of the swivelling and the correlation the symbol values with an angle that is a odd multiple of π/4, that means the symbols 0.5*√2*(1 + j), 0.5*√2*(-1 + j), 0.5*√2*(-1 -j) and 0.5*√2*(1 - j) are replaced by chips with the same angle but which lie on the unit square instead of lying on the unit circle. Therefore the possible values of the despreading code chips are (1 + 0), (1 + j), (0 + j), (-1 + j), (-1 + 0), (-1 - j), (0 - j) and (1 - j) which are shown in the diagram of figure 2.

Figure 2 shows a real axis 10 and an imaginary axis 11 building a complex plane which is perfectly suitable for illustration of these symbols. The unit circle 12 and the unit square 13 are likewise drawn. Each possible symbol is represented as a symbol vector 14.1 to 14.8.

As an example the following table shows the despreading code for a system with a processing gain of 8 and a symbol rate of 100 Hz. Although processing gain and symbol rate have unrealistic values this example is very suitable to show the swivelling results.

| symbols of a non-swivelled code | corresponding symbols of the code with an offset of | | | |
|---|---|---|---|---|
| 0 Hz | + 100 Hz | - 100 Hz | + 50 Hz | - 50 Hz |
| 1 | +1 | + 1 | 1 | 1 |
| 1 | +1 +j | +1 -j | 1 | 1 |
| 1 | +j | -j | +1 +j | +1 -j |
| 1 | -1 +j | -1 -j | +1 +j | +1 -j |
| 1 | -1 | -1 | +j | -j |
| 1 | -1 -j | -1 +j | +j | -j |
| 1 | -j | +j | -1 +j | -1 -j |
| 1 | +1 -j | +1 +j | -1 +j | -1 -j |

As can be seen the correlation of these values is simply the addition or subtraction of real and imaginary components. Complex multiplication functions are avoided and the complexity of the correlator-units 4.2 and 4.3 is therefore the same as the one of the 0 Hz frequency offset correlator-unit 4.1 because the input signal is assumed to be complex valued.

After correlation, a decision device 8 chooses which time bin/frequency bin combination is the one to use for despreading the incoming signal 2. This is done by comparing the correlation results of each correlator-unit 4.1 to 4.3 to a threshold. If the threshold is crossed acquisition is declared and an initial frequency bin 9.1 and an initial time bin 9.2 is output. Then despreading of the signal 2 can start and synchronisation is held by other units such as a DLL (delay locked loop) for timing synchronisation and a AFC (automatic frequency control) or a FFFE (feed forward frequency estimation) for more accurate frequency synchronisation.

Performance of the correlator 3 is shown in figure 3. Here the loss 16.1, 16.2 of the swivelling correlator-unit 4.2 (±7 kHz) and the loss 17.1, 17.2 of the swivelling correlator-unit 4.3 (±12 kHz) is compared to the loss 15 of the non-swivelling correlator-unit 4.1 (0 kHz). On the abscissa 18 is shown the frequency from -15 kHz to +15 kHz in steps of 5 kHz. On the ordinate 19 is shown the power loss from -5 dB to +1 dB in steps of 1 dB. It has to be noted that the loss 15 of the correlator-unit 4.1 has been normalised against the correlator-units 4.2 and 4.3 as the absolute amplitude of the correlations is 1 compared to 0.5*(√2+1) of the others (as can be seen from the table above).

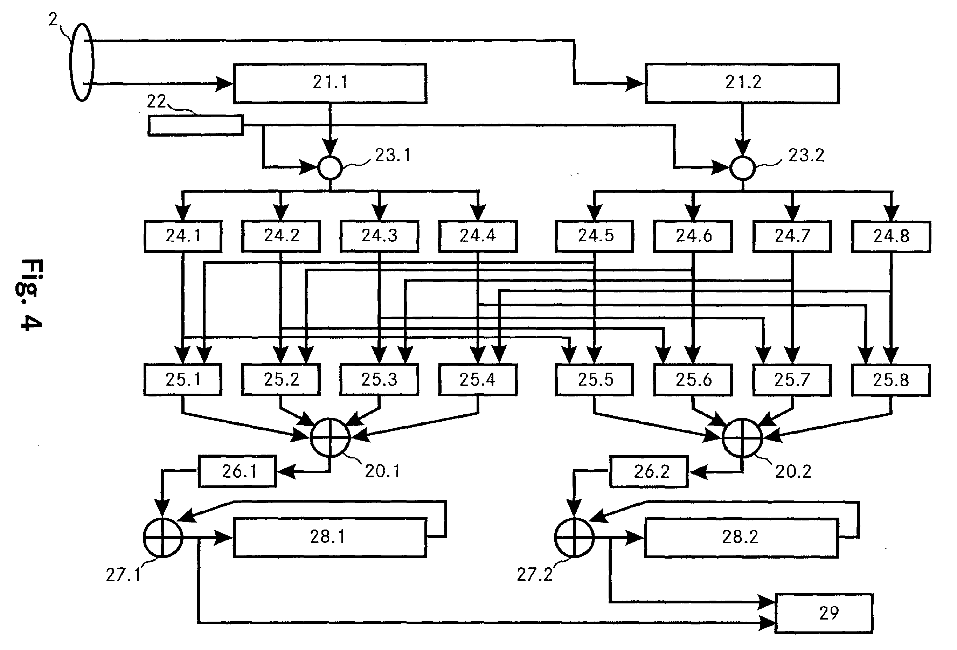

Figure 4 shows an exemplary implementation of the correlator-unit 4.2. It is assumed that the correlator-unit 4.2 has 256 correlator taps, the symbol rate is 15 kHz, the frequency offset bins to consider are ±7.5 kHz and the oversampling factor is 4.

The signals 2 are at the baseband frequency and are input to the correlator as real and imaginary components. These are written to a first and a second data shift register 21.1 and 21.2. The despreading code or rather the replica 5 of the spreading code which usually is locally generated is stored in the code register 22. The length of the data shift registers 21.1, 21.2 depends on the number of chips per symbol and the oversampling factor, in this case the length is 1024 (= 256 * 4). So every 4-th register is tapped. In sign changers 23.1 and 23.2 each of the 256 taps is first sign changed by the corresponding code register 22 cell content. The resulting values then are added to a plurality of segments for the real and the imaginary components. In the case of frequency offset bins of ±7.5 kHz the sign changed values, as shown in figure 4, are segmented into 4 segments 24.1 to 24.4 for the real components i and 4 segments 24.5 to 24.8 for the imaginary components q. The length of the segments reflects the swivelling for the corresponding frequency bin. The larger the frequency offset is the smaller are the segments which are built.

After segmentation follows the swivelling. The swivelled segments (l+jQ) are built according to the formula (l+jQ) = (a+jb)*(i+jq), where (a+jb) is the swivelling factor for the different angles.

Here the segments are swivelled by 0, π/4, 2*π/4 and 3*π/4 by adding the segments as shown in the following table which results in swivelled segments 25.1 to 25.8.

| | +7.5 kHz | | | -7.5 kHz | | |
|---|---|---|---|---|---|---|
| segment | swivelled by | Adder I | Adder Q | swivelled by | Adder I | Adder Q |
| 24.1 / 24.5 | 0 | +i | +q | 0 | +i | +q |
| 24.2 / 24.6 | π/4 | +i +q | -i +q | -π/4 | +i -q | +i +q |
| 24.3 / 24.7 | 2*π/4 | +q | -i | -2*π/4 | -q | +i |
| 24.4 / 24.8 | 3*π/4 | -i +q | -i -q | -3*π/4 | -i -q | +i -q |

The Accumulators 20.1 and 20.2 accumulate the complex values of the swivelled segments 25.1 to 25.8 to chip samples. Then the absolute value for each chip sample is determined with evaluation devices 26.1 and 26.2. The absolute value of the chip samples (l+jQ) are not computed as the square root of its squared components but as the sum of the absolute values of its components. To compute the result for one symbol of the correlation, the following adders 27.1 and 27.2 add up the absolute values which are written to shift registers 28.1 and 28.2.

These results are added for each correlator position to build the sum over several symbols. To determine if the right frequency bin is found and acquisition can be declared, a threshold detector 29 checks, if this sum over several symbols exceeds a given threshold. If yes, acquisition is declared and the evaluated timing and frequency values are used to start the code generator for data despreading at the right phase. If it does not exceed the threshold the acquisition process is started again.

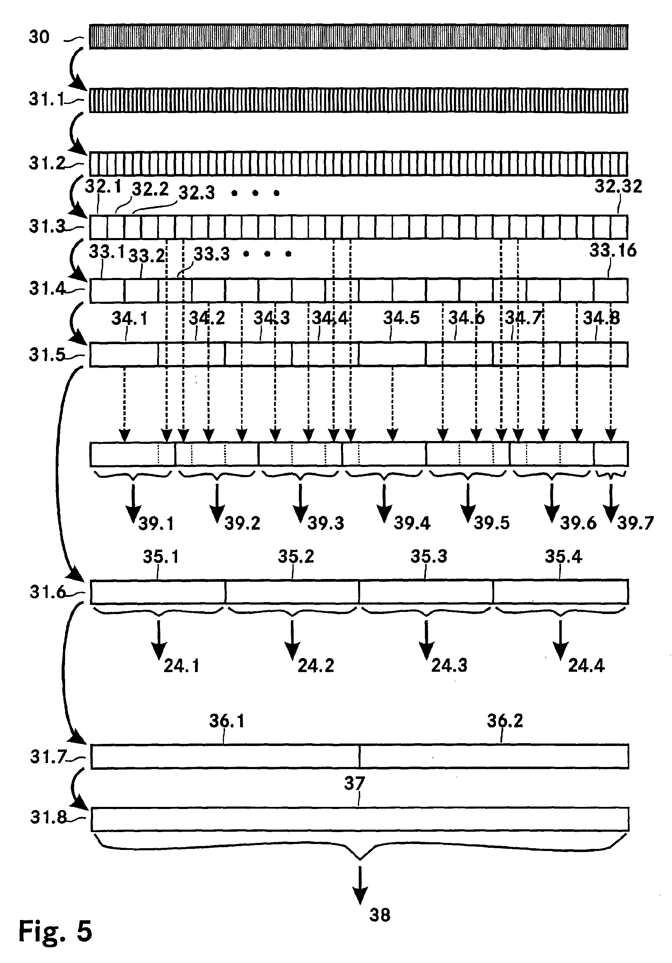

Figure 5 shows the adder tree for building the segments before the swivelling operation for 0 Hz, ±7.5 kHz and +12kHz. It starts with the sampling input 30 that is 256 sampled taps of the real or imaginary component of the received and down-converted signal 2. The first stage 31.1 comprises 128 adders and builds the sum over 2 taps of the sampling input 30. The second stage 31.2 comprises 64 adders and builds the sum over totally 4 taps. The third stage 31.3 comprises 32 adders and builds the sums 32.1 to 32.32 each over totally 8 taps. The fourth stage 31.4 comprises 16 adders and builds the sums 33.1 to 33.16 each over totally 16 taps. The fifth stage 31.5 comprises 8 adders and builds the sums 34.1 to 34.8 each over totally 32 taps. The sixth stage 31.6 comprises 4 adders and builds the sums 35.1 to 35.4 each over totally 64 taps. The seventh stage 31.7 comprises 2 adders and builds the sums 36.1 and 36.2 each over totally 128 taps. And the eighth stage 31.8 comprises 1 adder and builds the sum 37 over all taps of the sampling input 30.

Now the segments can be composed: The one and only segment 38 of the real component for 0 kHz frequency offset is the sum 37. The four segments 24.1 to 24.4 (for the real components) for ±7.5 kHz are the sums 35.1 to 35.4. And the seven segments 39.1 to 39.7 (for the real components) for ±12kHz are built as follows: Segment 39.1 is composed of the sums 34.1 and 32.5. Segment 39.2 is composed of the sums 32.6, 33.4, 1 and 33.5. Segment 39.3 is composed of the sums 33.6, 33.7, and 32.15. Segment 39.4 is composed of the sums 32.16 and 34.5. Segment 39.5 is composed of the sums 33.11, 33.12 and 32.25. Segment 39.6 is composed of the sums 32.26, 33.14 and 33.15. And the last segment 39.7 is the sum 33.16.

It is to mention that the segments for a specific frequency offset can be of the same length or of different lengths. As can be seen the four segments 24.1 to 24.4 for a frequency offset bin of 7.5 kHz all have a length of 64 taps while the seven segments 39.1 to 39.7 for the offset bin of 12 kHz do not have all the same length. Six of them have a length of 40 taps and the last segment 39.7 has a length of only 16 taps.

To summarise it can be stated that the invention enables the realisation of high performance, low complexity, highly reliable correlators with minimal additional complexity demand for large frequency offsets (compared to the symbol rate) in a DS/CDMA digital communication receiver. Such correlators or receivers respectively are best suited for use in communication systems, for example a satellite communication system, where large frequency offsets, multipath transmission, fast or slow fading and additive white gaussian noise has to be considered.

## Claims

1. Receiver structure with a non-coherent correlator for acquisition of a direct sequence spread-spectrum signal in a digital communication system, the signal being spread with a spreading code consisting of a plurality of chips, the correlator comprising a plurality of correlator-units and each correlator-unit being made for searching a specific time- and a specific frequency-region, **characterised in that** a despreading code used by a correlator-unit for determination of a correlation with the signal consists of a plurality of symbols, each symbol of the despreading code being a result of a phase rotation of the corresponding symbol of the spreading code with a complex swivelling factor whose phase is ±π/4 or a multiple thereof.

2. Receiver structure according to claim 1, **characterised in that** the phases of the swivelling factors of two successive chips of the despreading code are identical or differ by ±π/4.

3. Receiver structure according to any one of claims 1 or 2, **characterised in that** a amplitude of the swivelling factor is chosen such that a amplitude of the resulting symbol of the despreading code whose phase is an even multiple of ±π/4 is equal to 1 and a amplitude of the resulting symbol of the despreading code whose phase is a odd multiple of ±π/4 is equal to √2.

4. Digital communication system with a basestation and a plurality of mobile terminals, the basestation comprising a receiver structure with a non-coherent correlator for acquisition of a direct sequence spread-spectrum signal sent by a mobile terminal, the signal being spread with a spreading code consisting of a plurality of chips, the correlator comprising a plurality of correlator-units and each correlator-unit being made for searching a specific time- and a specific frequency-region, **characterised in that** a despreading code used by a correlator-unit for determination of a correlation with the signal consists of a plurality of chips, each chip of the despreading code being a result of a phase rotation of the corresponding chip of the spreading code with a complex swivelling factor whose phase is ±π/4 or a multiple thereof.

5. Digital communication system with a basestation and a plurality of mobile terminals, at least one mobile terminal comprising a receiver structure with a non-coherent correlator for acquisition of a direct sequence spread-spectrum signal sent by the basestation, the signal being spread with a spreading code consisting of a plurality of chips, the correlator comprising a plurality of correlator-units and each correlator-unit being made for searching a specific time- and a specific frequency-region, **characterised in that** a despreading code used by a correlator-unit for determination of a correlation with the signal consists of a plurality of chips, each chip of the despreading code being a result of a phase rotation of the corresponding chip of the spreading code with a complex swivelling factor whose phase is ±π/4 or a multiple thereof.

6. Non-coherent correlator for acquisition of a direct sequence spread-spectrum signal in a digital communication system, the signal being spread with a spreading code consisting of a plurality of chips, the correlator comprising a plurality of correlator-units and each correlator-unit being made for searching a specific time- and a specific frequency-region, **characterised in that** a despreading code used by a correlator-unit for determination of a correlation with the signal consists of a plurality of chips, each chip of the despreading code being a result of a phase rotation of the corresponding symbol of the spreading code with a complex swivelling factor whose phase is ±π/4 or a multiple thereof.

7. Process for non-coherent acquisition of a direct sequence spread-spectrum signal in a digital communication system, the signal being spread with a spreading code consisting of a plurality of chips and having a frequency offset, where the signal is correlated with a despreading code consisting of a plurality of complex chips, **characterised in that** a despreading code is used where a phase of each chip of the despreading code is ±π/4 or a multiple thereof.

8. Process according to claim 7, **characterised in that** a correlation of the signal and the despreading code is performed by
a) generating a plurality of data taps by sampling the received signal at a sampling frequency,
b) dividing the data taps into a real component and a imaginary component,
c) determining for the real component and the imaginary component separately a plurality of sign changed values by sign changing each data tap with the corresponding chip of the spreading code,
d) generating for the real component and the imaginary component separately a plurality of segments depending on the frequency offset to be searched by summing up the sign changed values,
e) swivelling the segments by computing a complex value for each segment through adding/subtracting the real component and the imaginary component of the segments in a specific manner,
f) computing a chip sample of a correlation result by accumulating the complex values of the swivelled segments,
g) computing an absolute value of the chip samples and
h) computing a correlation value over an entire data symbol by accumulating the absolute values of the chip samples.

9. Process according to claim 8, **characterised in that** in step g) the absolute value of the chip samples is taken as a sum of the absolute values of the real and the imaginary components.

10. Process according to any one of claims 7 to 9, **characterised in that** the correlation value is compared to a predefined threshold where acquisition is declared, when the correlation value exceeds the threshold and acquisition is started again otherwise.
